# EUROPÄISCHE PATENTANMELDUNG

(11) **EP 1 280 139 A1**
(43) Veröffentlichungstag der Anmeldung: **29.01.2003**
(21) Anmeldenummer: 02014748.4
(22) Anmeldetag: 04.07.2002
(51) Int. Cl.: G11B 5/73, G11B 5/706, G11B 5/71

(54) **Magnetisches Aufzeichnungsmedium**

(30) Priorität: 24.07.2001 DE 10135957
(71) Anmelder: EMTEC Magnetics GmbH, 67059 Ludwigshafen (DE)
(72) Erfinder: Mueller, Stefan, Dr., 77731 Willstätt-Sand (DE); Sandrock, Johannes, Dr., 77731 Willstätt-Eckartsweier (DE); Sturm, Andrea, 77731 Willstätt (DE); Goede, Wolfgang, 77855 Oberachern (DE); Kohl,Albert, 67229 Laumersheim (DE); Raether, Benedikt, Dr., 67117 Limburgerhof (DE)

(57) **Zusammenfassung**

Die Erfindung betrifft ein magnetisches Aufzeichnungsmedium, umfassend
a) einen Schichtträger,
b) mindestens eine darauf aufgebrachte untere Schicht, welche mindestens ein Bindemittel sowie mindestens ein anorganisches Pigment P1 enthält, sowie
c) mindestens eine auf der unteren Schicht aufgebrachte obere magnetische Schicht, welche mindestens ein magnetisches Pigment P2 und mindestens ein Bindemittel sowie mindestens ein weiteres, nichtmagnetisches Pigment P3 enthält, wobei
   (1) die Bindemittelmatrix der oberen magnetischen Schicht eine Tg von mindestens 50°C aufweist und die Bindemittelmatrix der unteren Schicht mindestens ein Bindemittel mit einer Tg < 50°C;
   (2) das weitere nichtmagnetische Pigment P3 der oberen magnetischen Schicht eine Teilchengröße besitzt, welche mindestens der Trockendicke der oberen magnetischen Schicht entspricht; und
   (3) die obere magnetische Schicht mindestens eine Verbindung (A) sowie mindestens eine Verbindung (B) enthält, wobei (A) und (B) den folgenden allgemeinen Formeln entsprechen

      R¹-COO-(R³-O)ₘ-R² (A)

      R¹-COO-R⁴ (B)
sowie Verfahren zu deren Herstellung.

## Beschreibung

Die Erfindung betrifft ein magnetisches Aufzeichnungsmedium, umfassend einen nichtmagnetischen Schichtträger und eine darauf aufgebrachte untere Schicht, welche mindestens ein anorganisches Pigment und mindestens ein Bindemittel enthält sowie eine auf dieser aufgetragene magnetische Schicht welche ein magnetisches Pigment, mindestens ein Bindemittel und ein Gleitmittel sowie mindestens ein nichtmagnetisches Pigment enthält.

Moderne magnetische Aufzeichnungsmedien werden den stetig wachsenden Anforderungen nur dann gerecht, wenn sie größere Speicherkapazitäten, schnellere Zugriffszeit und höhere Übertragungsraten der gespeicherten Informationen ermöglichen. Diese Aufzeichnungsmedien müssen deshalb zum einen so aufgebaut sein, daß die Magnetpigmente in der Aufzeichnungsschicht eine ausreichend hohe Dichte aufweisen, um hohe Speicherkapazitäten zu gewährleisten, zum anderen aber muß die Magnetschichtdicke sehr gering sein, um ein direktes Überschreiben der Daten beim erneuten Aufzeichnen ohne vorherigen Löschvorgang zu ermöglichen. Beispielsweise besitzen magnetische Aufzeichnungsmedien mit hoher Speicherkapazität heute nur noch Magnetschichtdicken von weniger als etwa 1 µm.

Um ein magnetisches Aufzeichnungsmedium für eine hohe Aufzeichnungsdichte herzustellen, gibt es im wesentlichen zwei verschiedene Methoden. Nach der ersten wird im Hochvakuum ein magnetisches Metall oder eine magnetische Metalllegierung auf einen Träger aufgebracht, um auf diese Weise einen magnetischen Metallfilm mit sehr geringer Dicke herzustellen. Derartige Aufzeichnungsmedien besitzen gute Aufzeichnungseigenschaften, insbesondere eine sehr hohe Aufzeichnungsdichte, können aber auf der anderen Seite nur in geringer Menge produziert werden, da die Aufbringung der Magnetschicht im Vakuum einen sehr komplizierten Prozeß darstellt. Außerdem neigen derartige Aufzeichnugsmedien, da das magnetische Metallpigment ungeschützt vorliegt, sehr leicht zur Oxidation, was die Langzeit-Haltbarkeit empfindlich verschlechtert.

Andererseits gibt es magnetische Aufzeichnungsmedien, bei denen das magnetische Metallpigment in einer Bindemittelmatrix eingebettet ist und in einer Beschichtungsmaschine auf einen unmagnetischen Schichtträger aufgebracht wird. Um auch hier zu einer hohen Empfindlichkeit zu gelangen, muß die Dicke der magnetischen Schicht sehr gering gehalten werden. Dies bedingt jedoch Probleme aufgrund der Rauheit der magnetischen Schicht, und führt folglich zu einer schlechten Haltbarkeit solcher Magnetschichten. Um diesen offensichtlichen Nachteil zu umgehen, wird auf den unmagnetischen Schichtträger zunächst eine unmagnetische Schicht aufgetragen und erst auf diese eine möglichst dünne magnetische Schicht aufgebracht. Dabei wirkt die unmagnetische Schicht als eine Pufferschicht, in welche die obere dünne magnetische Schicht teilweise eindringen kann, wobei Probleme aufgrund von Oberflächenrauheit weitgehend vermieden werden können. Derartige magnetische Aufzeichnungsmedien sind beispielsweise in der EP-A-0 520 155 beschrieben.

Ein Aufzeichnungsmedium der eingangs genannten Art ist aus der US 6,037,037 bekannt. Es besitzt in der unteren Schicht ein nadelförmiges Pigment mit einer Nadellänge zwischen 0,25 bis 1 µm. In der oberen magnetischen Schicht wird ein Bindemittel mit niedrigem Tg von 30°C und ein solches mit höherem Tg von 70°C eingesetzt. Ein derartiges Medium hat für hochdichte Aufzeichnungen eine zu große Oberflächenrauhigkeit, bedingt durch das grobkörnige Pigment in der unteren Schicht sowie eine unzureichende Standbildzeit wegen der Zumischung eines relativ weichen Bindemittels in der oberen Schicht.

Von einem Aufzeichnungsmedium, welches eine hohe Aufzeichnungsdichte gestattet, werden außer guten elektromagnetischen Eigenschaften noch folgende Eigenschaften gefordert:
A. der Reibkontakt zwischen Magnetkopf und Bandoberfläche muß möglichst gering gehalten werden, was die meisten Hersteller magnetischer Aufzeichnungsmedien dadurch zu erreichen versuchen, dass der oberen sowie der unteren Schicht Gleitmittel zugesetzt werden;
B. das magnetische Aufzeichnungsmedium darf beim Magnetkopf nur einen geringen Kopfabschliff, der durch eine Spezifikation begrenzt ist, verursachen. Diese Forderung kann beispielsweise dadurch erfüllt werden, daß die obere Schicht ein möglichst weiches Bindemittel enthält, in welche harte nichtmagnetische Pigmente eingearbeitet werden.
C. das magnetische Aufzeichnungsmedium soll auch bei längerem Betrieb keinen nennenswerten Abrieb zeigen, welcher die Magnetkopfoberfläche verkleben kann. Diese Forderung gilt auch bei extremen Klimabedingungen, z.B. bei sehr feuchtem oder sehr trockenem Klima oder bei höheren Temperaturen. Die letztgenannte Forderung wird dadurch erfüllt, daß die obere Schicht eine möglichst harte Oberfläche hat, was jedoch die Gefahr der Versprödung der Schicht mit sich bringt.
   Aus dem oben Genannten geht hervor, daß insbesondere die Forderung B und C einander widersprechen können. Um beiden Forderungen zu entsprechen, können weder Abrieb noch Kopfabschliff optimal eingestellt werden, wodurch die Qualität des magnetischen Aufzeichnungsmediums nachteilig beeinflußt wird.

### Kurze Beschreibung der Erfindung:

Demzufolge bestand die Aufgabe, ein magnetisches Aufzeichnungsmedium der eingangs genannten Art bereitzustellen, bei welchem die Reibung zwischen Bandoberfläche und Magnetkopf stark verringert ist und welches gleichzeitig nur einen geringen Kopfabschliff verursacht. Insbesondere sollten bei trockenem Klima sowie bei höheren Temperaturen keine oder nur sehr geringe Ablagerungen am Magnetkopf auftreten. Außerdem soll ein derartiges magnetisches Aufzeichnungsmedium eine möglichst dünne obere magnetische Schicht haben, um gute Aufzeichnungs- und Wiedergabeeigenschaften zu besitzen. Schließlich soll das Aufzeichnungsmedium einfach und in großen Stückzahlen herstellbar sein.

Erfindungsgemäß wurde obige Aufgabe durch Bereitstellung eines magnetischen Aufzeichnungsmediums gelöst, umfassend
a) einen Schichtträger,
b) mindestens eine darauf aufgebrachte untere Schicht, welche mindestens ein Bindemittel sowie mindestens ein anorganisches Pigment P1 enthält, sowie
c) mindestens eine auf der unteren Schicht aufgebrachte obere magnetische Schicht, welche mindestens ein magnetisches Pigment P2 und mindestens ein Bindemittel sowie mindestens ein weiteres, nichtmagnetisches Pigment P3 enthält, wobei
   (1) die Bindemittelmatrix der oberen magnetischen Schicht eine Tg von mindestens 50°C aufweist und die Bindemittelmatrix der unteren Schicht mindestens ein Bindemittel mit einer Tg < 50°C enthält und damit die viskoelastischen Eigenschaften des Schichtverbundes aus magnmetischen und nichtmagnetischen Schichten trägt;
   (2) das weitere nichtmagnetische Pigment P3 der oberen magnetischen Schicht eine Teilchengröße besitzt, welche mindestens der Trockendicke der oberen magnetischen Schicht entspricht; und
   (3) die obere magnetische Schicht mindestens eine Verbindung (A) sowie mindestens eine Verbindung (B) enthält, wobei (A) der folgenden allgemeinen Formel entspricht,

      R¹-COO-(R³-O)ₘ-R² (A)

      worin
      - R¹: einen gesättigten oder ein- oder mehrfach ungesättigten, geradkettigen oder verzweigten Kohlenwasserstoffrest mit 11 bis 22 Kohlenstoffatomen;
      - R²: einen gesättigten oder ein- oder mehrfach ungesättigten, geradkettigen oder verzweigten Kohlenwasserstoffrest mit 1 bis 6 Kohlenstoffatomen;
      - R³: einen geradkettigen oder verzweigten Alkylenrest mit 1 bis 4 Kohlenstoffatomen; und
      - m: einen ganzzahligen Wert von 1 bis 4;
      bedeutet;
      und wobei (B) der folgenden allgemeinen Formel entspricht:

      R¹-COO-R⁴ (B)

      worin
      - R¹: wie oben definiert ist; und
      - R⁴: einen gesättigten oder ein- oder mehrfach ungesättigten, geradkettigen oder verzweigten Kohlenwasserstoffrest mit 4 bis 8 Kohlenstoffatomen bedeutet.

### Detaillierte Beschreibung der Erfindung:

In einer ersten bevorzugten Ausführungsform der Erfindung wird ein magnetisches, vorzugsweise bandförmiges Aufzeichnungsmedium des oben beschriebenen Typs bereitgestellt, worin die als Gleitmittel eingesetzten Verbindungen (A) und (B) insbesondere den folgenden Bedingungen genügen:
R¹ steht in obigen Verbindungen (A) und (B) vorzugsweise für gesättigte, geradkettige.Alkylreste mit 11 bis 22, vorzugsweise 11 bis 18 Kohlenstoffatomen. Nichtlimitierende Beispiele sind Lauryl-, Myristyl-, Palmityl- und Stearylreste.
R² steht bevorzugt für einen gesättigten, geradkettigen oder verzweigten Kohlenwasserstoffrest mit 1 bis 6, vorzugsweise 1 bis 4 Kohlenstoffatomen. Nichtlimitierende Beispiele sind Methyl, Ethyl, i- oder n-Propyl, n-, i-, sec.- oder tert.-Butyl, n-oder i-Pentyl; außerdem n-Hexyl.
R³ bedeutet vorzugsweise einen geradkettigen oder verzweigten Alkylenrest mit 1 bis 4 Kohlenstoffatomen. Nichtlimitierende Beispiele hierfür sind Methylen, 1,2-Ethylen, 1,3- und 1,2-Propylen und 1,4- und 1,3-Butylen.
R⁴ steht vorzugsweise für einen gesättigten, geradkettigen oder verzweigten Kohlenwasserstoffrest mit 4 bis 8 Kohlenstoffatomen. Nichtlimitierende Beispiele hierfür sind i-, sec.- oder tert.-Butyl, n- oder i-Pentyl; außerdem n-Hexyl, n-Heptyl, n-Octyl, sowie die ein- oder mehrfach verzweigten Analoga davon.

Als konkrete nichtlimitierende Beispiele für Verbindungen der Formel (A) können C₂-C₄-Alkyl-di-C₂-C₄-alkylenglycolester von Stearin-, Palmitin-, Myristin- oder Laurinsäure; insbesondere i- oder n-Butyl-diethylenglycolstearat, -palmitat, -myristat und -laurat, genannt werden.

Als konkrete nichtlimitierende Beispiele für Verbindungen der Formel (B) können C₂-C₄-Alkylester von Stearin-, Palmitin-, Myristin- oder Laurinsäure; insbesondere i- oder n-Butylstearat, -palmitat, -myristat und -laurat, genannt werden.

Die obere magnetische Schicht des Aufzeichnungsmediums enthält ein oder mehrere, vorzugsweise ein Bindemittel mit einer Glasübergangstemperatur Tg von mindestens 50°C. Außerdem enthält diese Schicht außer dem magnetischen Pigment P2 noch mindestens ein weiteres unmagnetisches Pigment P3, das eine mittlere Teilchengröße besitzt, welche gleich oder etwas größer ist als die Trockenschichtdicke der magnetischen Schicht und welches als Abstandshalter dient, wie weiter unten noch näher beschrieben. Ferner enthält diese Schicht vorteilhafterweise noch ein weiteres unmagnetisches Pigment P4, welches eine kleinere mittlere Teilchengröße als die Schichtdicke hat; dieses Pigment stabilisiert die Schicht.

Die untere unmagnetische Schicht enthält mindestens:ein Bindemittel oder eine Bindemittelmischung, das oder die so gewählt ist, dass die Bindemittelmatrix der unteren Schicht die viskoelastischen Eigenschaften der Beschichtung trägt und in nicht unwesentlichem Anteil mindestens ein Bindemittel enthält, das weicher ist als die Bindemittelmatrix der oberen Schicht. Das für die untere Schicht verwendete Bindemittel oder die Bindemittelmischung umfasst erfindungsgemäß wenigstens ein Bindemittel mit einer Tg unterhalb von etwa 50°C, vorzugsweise unterhalb von 40°C sowie oberhalb von -100°C, vorzugsweise oberhalb von 20°C, wodurch die untere Schicht viskoelastisch ist. Durch Kombination eines solchen weichen Bindemittels mit einem härteren Bindemittel, mit z.B. einer Tg von mehr als etwa 50°C, wie oben für die Magnetschicht beschrieben, können die viskoelastischen Eigenschaften des erfindungsgemäßen Mediums optimal eingestellt werden. Das Mischungsverhältnis von hartem zu weichem Bindemittel in der unteren Schicht liegt im Bereich von etwa 80:20 bis 20:80, insbesondere etwa 60:40 bis 40:60 Gew.-Teilen.

Unter der Glasübergangstemperatur Tg versteht man erfindungsgemäß die gemäß ASTM D 3418-32 durch Differetialthermoanalyse (DSC) ermittelte "midpoint temperature" (vgl. Ullmann's Encyclopedia of Industrial Chemistry, 5. Aufl., Bd. 21A, S.169, VCH Weinheim, 1992; sowie Zosel, Farbe und Lack, 1976, 82, 125-134; und DIN 53765).

Außerdem hat die Anmelderin gefunden, daß zur Erzielung eines niederen Reibungswertes des magnetischen Aufzeichnungsmediums sowie zur Vermeidung von Abrieb bei extremen Klimabedingungen insbesondere in der oberen Schicht eine Kombination von zwei verschiedenen Gleitmitteln der oben definierten Formeln (A) und (B) vorteilhaft ist.

Eine mögliche, nichtbindende Erklärung für die überraschenden erzielten erfindungsgemäßen Vorteile kann darin gesehen werden, daß das Gleitmittel der Formel (A) wegen seiner leicht.hydrophilen Kopfgruppen bis zu 1 mol-% Wasser aufnehmen kann, so daß an der Oberfläche des magnetischen Aufzeichnungsträgers auch bei trockenem Klima eine höhere Feuchtigkeit erhalten bleibt, welche mit rein hydrophoben Gleitmitteln nicht erreicht werden kann. Mit steigendem Wert des Parameters m wird die Kopfgruppe immer hydrophiler. Auf diese Weise wird auch bei längerem Gebrauch des magnetischen Aufzeichnungsmediums die Bildung von Abrieb, insbesondere des "brown stain", zuverlässig vermieden. Überdies scheinen derartige amphiphile Gleitmittel eine Lipid-Doppelschicht zu bilden, welche die Verringerung der Reibung zwischen Bandoberfläche und Magnetkopf bewirkt. Das Gleitmittel der Formel B wirkt offensichtlich als Cotensid und stabilisiert die genannte Lipid-Doppelschicht.

Weiterhin hat es sich nach Untersuchungen der Anmelderin als vorteilhaft erwiesen, wenn in der unteren, vorzugsweise unmagnetischen Schicht mindestens ein möglichst feinteiliges Pigment P1 mit einer BET-Oberfläche von mindestens 60 m²/g, wie z.B. mindestens 80 m²/g, vorzugsweise mindestens 100 m²/g vorhanden ist: die Schicht wirkt dann als Reservoir für die genannte Kombination der Gleitmittel A und B. Dazu ist es vorteilhaft, wenn auch die untere Schicht die Gleitmittelkombination A und B enthält.

Wie aus den später beschriebenen Beispielen hervorgeht, zeichnet sich ein so aufgebautes magnetisches Aufzeichnungsmedium durch eine überraschend geringe, gleichmäßige Reibung zwischen Magnetkopf und Bandoberfläche aus, der Abrieb des Magnetkopfs durch das Aufzeichnungsmedium ist deutlich vermindert, und außerdem wird auch unter extremen Klimabedingungen nur eine geringe Bildung von Abrieb beobachtet.

Im Folgenden wird der Aufbau des magnetischen Aufzeichnungsmediums genauer erläutert.

### a. Der unmagnetische Schichtträger:

An die Auswahl des Schichtträgers werden keine besonderen Anforderungen gestellt. Er kann starr oder flexibel sein, er kann aus Metall, Glas, Keramik, Kohlenstoff oder einem polymeren Material bestehen.

Beispiele für organische Polymere sind Polyester, wie Polyethylenterephthalat und -naphthalat, Polyolefine, Cellulosederivate, Vinylpolymere oder plastische Massen, wie Polycarbonat und Polyimid. Als Metalle sind beispielsweise Aluminium, Kupfer, Zinn, Zink oder nichtmagnetische Legierungen verwendbar.

Bei organischen polymeren Schichtträgern liegt die mittlere Schichtdicke bei 1 bis 10 µm und die mittlere Oberflächenrauhigkeit liegt im Bereich von 25 nm oder weniger. Um besondere mechanische Eigenschaften des Aufzeichnungsmediums zu erreichen, können auch mehrere unterschiedliche Polymere vorzugsweise in einem Arbeitsgang coextrudiert werden. Falls erforderlich, kann der polymere Schichtträger mit einer dünnen Haftschicht, deren Dicke im allgemeinen unter 1 µm liegt, versehen werden. Die Zusammensetzung derartiger Haftschichten ist aus dem Stand der Technik bekannt.

### b. Die auf den Schichtträger aufgebrachte untere unmagnetische oder schwachmagnetische Schicht:

Die untere Schicht enthält vorzugsweise mindestens ein polymeres Bindemittel mit einer Tg von höchstens 50°C, vorzugsweise höchstens 45°C und besonders bevorzugt höchstens 40°C. Die untere Grenze für die Tg liegt bei -100°C, vorzugsweise +30°C. Jedoch kann die Schicht auch weitere Bindemittel mit einer höheren Tg als oben angegeben enthalten. Bindemittel mit höherem Tg sind z.B. die für die Herstellung der magnetischen Schicht brauchbaren Bindemittel (vgl. folgender Abschnitt c)).

Beispiele für Bindemittel mit einer Tg von unter 50°C sind insbesondere Polyurethane mit Ester- oder Ether- oder Carbonatgruppen sowie verschiedene Kautschuke. Vorzugsweise enthalten die Bindemittel für die untere Schicht polare Gruppen, um die Dispergierfähigkeit der Bindemittel für die weiteren Zusätze, insbesondere die Pigmente zu erhöhen. Beispiele für solche polaren Gruppen sind -COOM, -SO₃M, O-SO_{3'}M, -PO(OM)₂, Aminogruppen, Ammoniumgruppen, OH-Gruppen, SH-Gruppen sowie Epoxygruppen. Bei den genannten polaren Gruppen steht M für ein Wasserstoff- oder Alkalimetallatom, wie insbesondere Na oder K, oder für Ammonium.

Als weiteren Zusatz enthält die untere Schicht mindestens ein feinteiliges unmagnetisches Pigment P1, von denen eines vorzugsweise einen BET-Wert von mindestens 40, wie z.B. mindestens 55 oder mindestens 100 m²/g besitzt. Beispiele für derartige unmagnetische Pigmente sind
- Ruß, dessen mittlere Teilchengröße in weiten Bereichen schwanken kann, beispielsweise zwischen 0,015 und 1 µm. Die spezifische Oberfläche des Rußes liegt im allgemeinen zwischen 20 und 300 m²/g.
- Metalloxide, beispielsweise Chromoxid, Aluminiumoxid, Ceroxid, Eisenoxid, Corund, Titandioxid, Siliciumdioxid, Zinnoxid, Magnesiumoxid, Wolframoxid, Zirkonoxid und Zinkoxid, Metallcarbonate, Metallsulfate, Metallnitride, Metallcarbide oder Metallsulfide. Sie können mit einem anorganischen oder organischen Überzug versehen sein. Die Gestalt dieser Pigmente kann nadelförmig, kubisch, kugelförmig oder tafelförmig sein. Diese Pigmente haben einen mittleren Teilchendurchmesser im Bereich von 0,01 bis 2 µm, wie z.B. 0,05 bis 0,2 µm. Nadelförmige Pigmente besitzen vorzugsweise eine Länge im Bereich von 0,05 bis 0,4 µm, wie z.B. 0,1 bis 0,15 µm und ein Achsverhältnis von etwa 1:2 bis 1:10, wie z.B. 1:5 bis 1:6. Mindestens eines der genannten Pigmente sollte sehr feinteilig sein mit einem BET-Wert von mindestens 50 m²/g. Pigmente haben eine MOHS-Härte von mindestens 4, vorzugsweise mindestens 6.

Anstelle oder in Kombination mit obigen unmagnetischen Pigmenten P1 kann in der unteren Schicht ein weichmagnetisches Pigment P5, insbesondere mit einer Koerzitivkraft von kleiner als 0,7 kA/m und einer maximalen spezifischen Magnetisierung von etwa 30 bis 65 emu/g, enthalten sein. Für die Feinteiligkeit des weichmagnetischen Pigments gilt ähnliches wie für das oben beschriebene unmagnetische Pigment; das weichmagnetische Pigment hat vorteilhafterweise eine BET-Oberfläche von mindestens 80 m²/g, bevorzugt von mindestens 100 m²/g. Die weichmagnetischen Pigmente P5 können eine beliebige Teilchengeometrie besitzen. Vorzugsweise sind sie annähernd sphärisch, sphäroid oder nadelförmig ausgebildet. Die Teilchengröße bei sphärischen oder sphäroiden Teilchen liegt bei etwa 0,01 bis 0,2 µm, wie z.B. 0,02 bis 0,04 µm. Nadelförmige Pigmente besitzen eine Länge von etwa 0,05 bis 0,4 µm, wie z.B. 0,1 bis 0,15 µm und ein Achsverhältnis von etwa 1:2 bis 1:10, wie z.B. 1:5 bis 1:6. Verfahren zur Herstellung dieser weichmagnetischen Pigmente sind in DE-A-26 42 383, DE-A-30 27 012, DE-A-44 27 821, JP 57-17 57 34 sowie in der DE-A-100 17 490 beschrieben.

Des weiteren enthält die untere Schicht
- Gleitmittel, beispielsweise Fettsäuren oder Fettsäureester, Fettsäureamide, Siliconöle, fluorhaltige Verbindungen oder andere. Besonders bevorzugt umfassen die darin verwendeten Gleitmittel eine Kombination der oben definierten Verbindungen der Formeln (A) und (B), beispielsweise im Gewichtsverhältnis von 80:20 bis 20:80, insbesondere etwa 60:40 bis 40:60 oder 50:50,
- Leitfähigkeitserhöhende Zusätze, wie Bariumsulfat, Nitrate oder die bereits erwähnten Ruße oder Graphit,
- Vernetzungsmittel, beispielsweise Polyisocyanat,
- Tenside, die in großer Anzahl aus dem Stand der Technik bekannt sind.

Die mittlere Trockendicke dieser unteren Schicht beträgt zwischen 0,5 und 10 µm, bevorzugt etwa 1,0 bis 3 µm.

### c. Die auf die untere Schicht aufgebrachte obere magnetische Schicht:

Die obere dünne magnetische Aufzeichnungsschicht enthält mindestens ein ferromagnetisches Pigment P2, bevorzugt ein metallisches Pigment oder Legierungspigment. Diese Pigmente enthalten als Hauptbestandteile Fe, Ni und/oder Co; ferner erfordelichenfalls Al, Si, S, Sc, Ti, V, Cr, Cu, Y, Mo, Pd, Rh, Ag, Sn, Sb, Te, Ba, Ta, W, Re, Au, Hg, Pb, Bi, La, Ce, Pr, Nd, P, Mn, Zn, Sr oder B, einzeln oder im Gemisch. Die Pigmente können an der Oberfläche eine Schutzhülle gegen Oxidation oder sonstige schädliche Einflüsse oder zur Verbesserung der Dispergierbarkeit aufweisen. Geeignet sind ferner hochkoerzitive ferromagnetische Eisenoxide, Chromdioxid und Ferrite wie Bariumferrit.

Die Metall- und Legierungspulver sind bevorzugt nadel- oder spindelförmig und weisen eine BET-Oberfläche von etwa 40 bis 90 m²/g auf. Die Achsenlänge beträgt höchstens 200 nm, das Achsenverhältnis (längs zu quer) liegt im Bereich von 2 bis 20. Die Koerzitivkraft liegt bei mindestens 100 kA/m und die Sättigungsmagnetisierung im Bereich von mindestens 100 bis 180 emu/g. Das Metall- oder Legierungspulver kann einen kleinen Anteil Wasser oder Hydroxid als nichtmetallischen Anteil enthalten.

Bariumferrit ist bevorzugt plättchenförmig mit einer mittleren Teilchengröße von 20 bis 120 nm und einem Achsenverhältnis von 2 bis 10.

Erfindungswesentlich ist für die obere Schicht, daß sie ausschließlich Bindemittel mit einer Tg von mindestens 50°C, vorzugsweise mindestens 60°C und höchstens 150°C, vorzugsweise höchstens 80°C besitzt. Nichtlimitierende Beispiele für solche Bindemittel sind: Vinylchlorid-Vinylacetat-Copolymere, Vinylchlorid-Copolymere, Vinylchlorid-Vinylidenchlorid-Copolymere, Vinylchlorid-Acrylnitril-Copolymere, Acrylsäureester-Acrylnitril-Copolymere, Acrylsäureester-Vinylidenchlorid-Copolymere, Acrylsäureester-Styrol-Copolymere, Methacrylsäureester-Acrylnitril-Copolymere, Methacrylsäureester-Vinylidenchlorid-Copolymere, Methacrylsäureester-Styrol-Copolymere, Urethanelastomere, Nylon-Siliconharze, Nitrocellulose-Polyamidharze, Polyvinylfluorid, Vinylidenchlorid-Acrylnitril-Copolymere, Butadien-Acrylnitril-Copolymere, Polyamid, Polybutyrale, Cellulosederivate, Styrol-Butadien-Copolymere, Polyesterharze, Chlorvinylether-Acrylsäureester-Copolymere, Aminharze, Phenoxyharze, Epoxyharze, Polyvinylacetalharze, Polyvinylbutyralharze. Diese Bindemittel können für sich allein oder in Kombination eingesetzt werden. Vorzugsweise enthalten die genannten Bindemittel polare Gruppen zur Erhöhung der Dispergierfähigkeit; als polare Gruppen eignen sich die unter Abschnitt b für die Bindemittel der unteren nichtmagnetischen Schicht beschriebenen Gruppen.

Des weiteren kann die obere magnetische Schicht auch einen oder mehrere der folgenden unmagnetischen Zusätze enthalten:
- Rußpartikel, wie unter Abschnitt b beschrieben;
- mindestens ein unmagnetisches Pigment P3/P4, bevorzugt Metalloxide, wie unter Abschnitt b für die untere, nichtmagnetische Schicht beschrieben. Diese Pigmente haben, im wesentlichen bestimmt durch deren Teilchengröße, für die obere Schicht im wesentlichen zwei Aufgaben: Zum einen sollen sie als Abstandshalter zwischen der Oberfläche der magnetischen Schicht und dem Magnetkopf dienen. Dazu ist, wie schon weiter oben erläutert, der Teilchendurchmesser dieser Pigmente P3 gleich oder etwas größer als die Trockendicke der oberen magnetischen Schicht. Dann ist es möglich, daß sie beim während der Herstellung des magnetischen Aufzeichnungsmediums durchgeführten Kalandrierschritt, welcher weiter unten noch näher beschrieben wird, gerade so tief in die untere Schicht eintauchen, daß sie nachfolgend gerade etwas aus der oberen Schicht hervorragen, ohne aber eine empfindlichkeitsvermindernde Abstandsdämpfung des Aufzeichnungsmediums hervorzurufen. Zum anderen können in der oberen Schicht Pigmente P4, insbesondere Metalloxide, vorhanden sein, welche diese Schicht mechanisch stabilisieren. Diese Pigmente sind im Teilchendurchmesser vorteilhafterweise kleiner als die Trockendicke der oberen Schicht. Die Teilchengeometrie der Pigmente P3/P4 ist vorzugsweise sphäroid bis sphärisch oder annähernd sphärisch. Besonders bevorzugt sind Pigmente P3/P4 mit eine MOHS-Härte von mindestens 6, ein bevorzugtes Beispiel dafür ist Al₂O₃. Besonders günstig ist ein annähernd sphärisches α-Fe₂O₃. Das Gewichtsverhältnis der kleinen zu den großen Pigmenten liegt im Bereich von 20:80 bis 80:20, wie z.B. 60:40 bis 40:60. Für das Verhältnis von mittlerem Teilchendurchmesser r zu mittlerer Trockenschichtdicke d der oberen Schicht gelten bevorzugt folgende Bereiche: r(P3):d = 1 bis 1,5:1, insbesondere 1,05 bis 1,2:1 r(P4):d = 0,1 bis 1:1, insbesondere 0,4 bis 0,8:1.
- Zusätze zur Erhöhung der Leitfähigkeit, der Plastizität, der Schichtvernetzung sowie der Dispergierfähigkeit und zur Verringerung der Oberflächenspannung (Tenside). Diese Zusätze wurden bereits im Abschnitt b behandelt.
- Als Gleitmittel können gleichfalls die unter Abschnitt b genannten Zusätze verwendet werden. Wesentlich für die geforderten mechanischen Eigenschaften des erfindungsgemäßen magnetischen Aufzeichnungsmediums ist, daß in der oberen Schicht zumindest eine Kombination der oben genannten Gleitmittel der Formeln A und B eingesetzt sind. Diese werden in einer Konzentration von 0,2 bis 10 Gew.-%, bezogen auf das ferromagnetische Pulver, eingebracht. Das Mengenverhältnis des Gleitmittels A zum Gleitmittel B ist im Bereich 20:80 bis 80:20, wie z.B. 60:40 bis 40:60 wählbar. Besonders bevorzugte Beispiele für Verbindungen der Formel A sind Butoxyethylstearat, Butyldiethylenglycolstearat, Butyldiethylenglycolpalmitat, Butoxyethylpalmitat, Butyldiethylenglycolpalmitat und Butylpropylenglycolstearat. Besonders bevorzugte Beispiele für Verbindungen der Formel B sind Butylstearat, Isobutylstearat, Butylpalmitat, Isobutylpalmitat, Butylmyristat, Isobutylmyristat, Butyllaurat und Isobutyllaurat. Die Erfindung ist jedoch nicht auf die Anwendung der obengenannten konkreten Verbindungen beschränkt.

Die mittlere Trockendicke d der oberen magnetischen Schicht liegt vorzugsweise im Bereich von höchstens 0,5 µm, besonders bevorzugt im Bereich von 0,15 bis 0,30 µm. Zu geringe Trockendicken haben eine Verminderung der Sättigungsmagnetisierung zur Folge, während zu hohe Trockendicken über 0,5 µm bereits eine Verringerung der Aufzeichnungsdichte bewirken.

### d. Die gegebenenfalls auf dem Schichtträger aufgebrachte rückwärtige Beschichtung:

Gegebenenfalls kann auf der anderen, der Magnetschicht abgewandten Seite des Schichtträgers zur Verbesserung der mechanischen Eigenschaften des erfindungsgemäßen Aufzeichnungsmediums eine im wesentlichen aus dem Stand der Technik bekannte Rückseitenschicht aufgebracht werden. Diese Rückseitenschicht hat im allgemeinen eine Trockendicke im Bereich von 0,3 bis 2,5 µm. Diese Rückseitenschichf kann folgende Zusätze enthalten:
- Bindemittel, wie oben beschrieben
- Ruß
- Vernetzungsmittel.

### Herstellung erfindungsgemäßer Aufzeichnungsmedien:

Aus den oben beschriebenen zwingenden und gegebenenfalls optionalen Bestandteilen werden in an sich bekannter Weise Dispersionen hergestellt.

Das Verfahren zur Herstellung brauchbarer Dispersionen ist an sich bekannt und umfaßt mindestens eine Knetstufe, eine Dispergierstufe und gegebenenfalls eine Mischstufe, die vor und nach den vorhergehenden Stufen vorgesehen sein kann. Die jeweiligen Stufen können jeweils aus zwei oder mehr Arbeitsschritten zusammengesetzt sein. Bei der Herstellung der Zusammensetzung können alle Ausgangsmaterialien, nämlich das ferromagnetische Pulver, die Bindemittel, die Ruße, die Schleifmittel oder Stützpigmente, die Antistatikmittel, die Schmiermittel, die Netzmittel sowie die Dispergierhilfsmittel sowie vorwiegend organische Lösungsmittel gleich zu Beginn des Verfahrens oder später während des Verfahrens dem Reaktor zugesetzt werden. Beispiele hierfür sind Tetrahydrofuran, Methylethylketon, Cyclohexanon, Dioxan, Aceton, Ester wie Butyl-, Ethyl- oder Methylacetat, Ethyllactat, Glycolmonoethyletheracetat, Glycol oder aromatische Kohlenwasserstoffe. Diese können einzeln oder in Kombination eingesetzt werden.

Der Vernetzer, sowie gegebenenfalls ein Vernetzungskatalysator wird vorzugsweise nach Abschluß der Dispersionsherstellung zugegeben.

Nach Feinfiltration durch engmaschige Filter mit einer Weite von höchstens 5 µm werden die Dispersionen mittels einer konventionellen Beschichtungsvorrichtung mit Geschwindigkeiten im üblichen Bereich aufgetragen, im Magnetfeld in im wesentlichen longitudinaler Aufzeichnungsrichtung ausgerichtet, getrocknet und nachfolgend einer Kalanderbehandlung und gegebenenfalls einer weiteren Oberflächen-Glättungsbehandlung unterzogen.

Dabei bedeutet "im wesentlichen longitudinal ausgerichtet", daß die magnetischen Teilchen zwar im wesentlichen in der Schichtebene in Aufzeichnungsrichtung orientiert vorliegen, jedoch auch schräg zur Schichtebene orientiert angeordnet sein können.

Zur Herstellung des erfindungsgemäßen magnetischen Aufzeichnungsmediums kann die Beschichtung mittels Rakelgießer, Messergießer, Abstreifgießer, Extrudergießer, Reverse-Roll-Coater oder Kombinationen daraus erfolgen. Beide Schichten können simultan im Naß/Naß-Verfahren oder im Naß/Trocken-Verfahren aufgetragen werden.

Besonders bevorzugt zur Herstellung der erfindungsgemäßen magnetischen Aufzeichnungsmedien ist ein Messergießer mit mindestens einer, vorzugsweise zwei oder mehr Austrittsöffnungen, welcher aus der DE-A-195 04 930 bekannt ist. Ebenfalls geeignet ist ein Extrudergießer mit mindestens einer, vorzugsweise zwei oder mehr Austrittsöffnungen für die Dispersionen, wobei den Öffnungen gegenüberliegend auf der anderen Seite des flexiblen Schichträgers die Kante oder der Luftspalt eines Magneten gegenübersteht und wobei dessen Feldlinien im wesentlichen parallel zur Laufrichtung des Schichtträgers verlaufen. Solche Anordnungen sind aus der EP-B-0 654 165 oder der FR-A-2 734 500 bekannt.

Nach dem Beschichten erfolgt Trocknung und Kalandrierung des Mediums. Die Kalandrierung geschieht auf üblichen Maschinen mittels Hindurchführen der getrockneten Bahnen zwischen geheizten und polierten Walzen, gegebenenfalls unter Anwendung von Druck und Temperaturen zwischen 25 und 100°C, vorzugsweise zwischen 60 und 90°C. Dabei wird das magnetische Aufzeichnungsmedium geglättet und verdichtet.

Das so erhaltene magnetische Aufzeichnungsmedium wird in die gewünschte Gebrauchsform geschnitten und den üblichen elektromagnetischen sowie mechanischen Prüfungen unterzogen.

Die folgenden Beispiele sollen die Erfindung näher erläutern, ohne sie jedoch darauf zu beschränken.

Alle im Rahmen der vorliegenden Beschreibung angegebenen Teilchengrößen betreffen mittlere Teilchengrößenangaben, wie z.B. durch dynamische Lichtstreuung ermittelte Mittelwerte.

### Beispiel 1

### (alle Mengenangaben in Gewichtsteilen)

Auf einen Schichtträger, bestehend aus Polyethylennaphthalat mit einer Dicke von 6,2 µm wurde eine unmagnetische Schicht mit folgender Zusammensetzung aufgetragen:

| | |
|---|---|
| α-Fe₂0₃, BET 56 m²/g 0,15 µm | 100 |
| Ruß, BET 112 m²/g | 15 |
| Polyvinylchlorid mit polaren OH⁻- und SO₃⁻-Gruppen, Tg=64°C | 13 |
| Polyester-Polyurethan, Tg = 45°C | 16 |
| Polyisocyanat | 3 |
| Myristinsäure | 1 |
| Stearinsäure | 1 |
| Butoxyethoxyethylstearat | 0,5 |
| Isobutylstearat | 0,5 |
| Tetrahydrofuran | 220 |
| Dioxan | 220 |
| Cyclohexanon | 100 |

Auf diese Schicht wurde eine obere magnetische Schicht mit folgender Zusammensetzung aufgetragen:

| | |
|---|---|
| Metallpigment Fe/Al, Hc=2390 Oe, Nadellänge=100nm | 100 |
| Polyvinylchlorid mit polaren OH⁻- und SO₃⁻-Gruppen, Tg=64°C | 15 |
| Stearinsäure | 2 |
| Phosphorsäureester | 1 |
| Ruß, BET 112 m²/g | 1,5 |
| Al₂O₃, Teilchengröße 0,30 µm | 3,8 |
| Al₂O₃, Teilchengröße 0,20 µm | 2,3 |
| Butoxyethoxyethylstearat | 0,4 |
| Isobutylstearat | 0,2 |
| Polyisocyanat | 3,2 |
| Tetrahydrofuran | 270 |
| Dioxan | 270 |
| Cyclohexanon | 100 |

Die untere Schicht hatte nach dem Kalandrieren eine Trockendicke von 1,3 µm, die obere Schicht hatte nach dem Kalandrieren eine Trockendicke von 0,27 µm. Beide Schichten wurden mittels eines Messergießers im Simultanbeguß aufgetragen.

### Beispiel 2

Es wurde verfahren wie im Beispiel 1, jedoch wurde sowohl in der unteren wie in der oberen Schicht Butoxyethoxyethylstearat durch jeweils gleiche Mengen Butoxyethoxyethylpalmitat ersetzt.

### Beispiel 3

Es wurde verfahren wie im Beispiel 1, jedoch wurden in der oberen Schicht 3,8 Teile Al₂O₃ mit einer Teilchengröße von 0,40 µm anstatt 0,30 µm eingesetzt; die Schichtdicke der oberen Schicht betrug 0,35 µm. Die 2,3 Teile Al₂O₃ mit der Teilchengröße 0,20 µm wurden beibehalten.

### Beispiel 4

Es wurde verfahren wie im Beispiel 1, jedoch wurden in der unteren Schicht 50 Teile α-Fe₂O₃ mit dem BET-Wert 56 m²/g ersetzt durch 50 Teile eines weichmagnetischen Pigments mit einem BET-Wert von 104 m²/g, mittlere Teilchengröße: 0,028 µm, und mit einem Hc von 10 Oe eingesetzt.

### Beispiel 5

Es wurde verfahren wie im Beispiel 1, jedoch wurde sowohl in der unteren Schicht als auch in der oberen Schicht das Isobutylstearat durch gleiche Mengen an Isobutylpalmitat ersetzt.

### Beispiel 6

Es wurde verfahren wie im Beispiel 1, jedoch wurde zusätzlich auf die Rückseite des Schichtträgers eine Rückseitenschicht mit der folgenden Zusammensetzung mittels eines Reverse-Roll-Coaters in einer Trockendicke von 0,6 µm aufgetragen

| | |
|---|---|
| Ruß, BET-Wert 60 m²/g | 30 |
| Ruß, BET-Wert 200 m²/g | 60 |
| Polyester-Polyurethan | 15 |
| Tetrahydrofuran | 150 |
| Dioxan | 150 |

### Vergleichsbeispiel 1

Es wurde verfahren wie im Beispiel 1, jedoch wurde in der oberen Schicht Butoxyethoxyethylstearat nicht verwendet.

### Vergleichsbeispiel 2

Es wurde verfahren wie im Beispiel 1, jedoch wurde in der oberen Schicht das Al₂O₃ mit der Teilchengröße 0,30 µm vollständig durch Al₂O₃, Teilchengröße 0,2 µm ersetzt.

### Vergleichsbeispiel 3

Es wurde verfahren wie im Beispiel 1, jedoch wurde in der oberen Schicht das Polyvinylchlorid mit der Tg von 64°C durch eine gleiche Menge Polyester-Polyurethan mit einer Tg von 33°C ersetzt.

### Vergleichsbeispiel 4

Es wurde verfahren wie im Beispiel 1, jedoch wurde in der oberen Schicht Isobutylstearat nicht verwendet.

Die nachfolgende Tabelle zeigt die mit den magnetischen Aufzeichnungsträgern gemäß den Beispielen (B1 bis B6) sowie den Vergleichsbeispielen (VB1 bis VB4) erzielten Ergebnisse, und zwar
- Pegel in dB relativ zum Referenzband DVC Panasonic AJ-P 63 MP
- Pegelverlust bei 40°C, 5 % relative Feuchtigkeit
- Kopfabschliff nach 250 Stunden Durchlaufzeit des Aufzeichnungsträgers
- "brown stain"-Bildung nach 15 Stunden Durchlaufzeit des Aufzeichnungsträgers bei 40°C und 5 % Luftfeuchte, beurteilt qualitativ in Stufen: 0 (keine Ablagerung) bis 6 (starke Ablagerung).

**Tabelle**

| Medium gemäß | Pegel | Pegelverlust | Kopfabschliff in µm | brown stain |
|---|---|---|---|---|
| B1 | 0,2 | 0,5 | 0,7 | 2 |
| B2 | 0,1 | 0,7 | 0,7 | 2 |
| B3 | -0,5 | 0,4 | 0,9 | 2 |
| B4 | -0,4 | 0,6 | 0,5 | 2 |
| B5 | -0,1 | 0,5 | 0,8 | 2 |
| B6 | 0,3 | 0,2 | 0,5 | 1 |
| VB1 | -0,1 | 3,5 | 1,8 | 4 |
| VB2 | 0,1 | 0,5 | 2,2 | 2 |
| VB3 | -0,5 | 4,5 | 0,7 | 6 |
| VB4 | -0,6 | 2,5 | 1,7 | 3 |

## Patentansprüche

1. Magnetisches Aufzeichnungsmedium, umfassend
a) einen Schichtträger,
b) mindestens eine darauf aufgebrachte untere Schicht, welche mindestens ein Bindemittel sowie mindestens ein anorganisches Pigment P1 enthält, sowie
c) mindestens eine auf der unteren Schicht aufgebrachte obere magnetische Schicht, welche mindestens ein magnetisches Pigment P2 und mindestens ein Bindemittel sowie mindestens ein weiteres, nichtmagnetisches Pigment P3 enthält, wobei
(1) die Bindemittelmatrix der oberen magnetischen Schicht eine Tg von mindestens 50°C aufweist und die Bindemittelmatrix der unteren Schicht mindestens ein Bindemittel mit einer Tg < 50°C;
(2) das weitere nichtmagnetische Pigment P3 der oberen magnetischen Schicht eine Teilchengröße besitzt, welche mindestens der Trockendicke der oberen magnetischen Schicht entspricht; und
(3) die obere magnetische Schicht mindestens eine Verbindung (A) sowie mindestens eine Verbindung (B) enthält, wobei (A) der folgenden allgemeinen Formel entspricht
R¹-COO-(R³-O)ₘ-R² (A)
worin
R¹ einen gesättigten oder ungesättigten, geradkettigen oder verzweigten Kohlenwasserstoffrest mit 11 bis 22 Kohlenstoffatomen;
R² einen gesättigten oder ungesättigten, geradkettigen oder verzweigten Kohlenwasserstoffrest mit 1 bis 6 Kohlenstoffatomen;
R³ einen Alkylenrest mit 1 bis 4 Kohlenstoffatomen; und m einen ganzzahligen Wert von 1 bis 4;
bedeutet;
und wobei (B) der folgenden allgemeinen Formel entspricht:
R¹-COO-R⁴ (B)
worin
R¹ wie oben definiert ist; und
R⁴ einen gesättigten oder ungesättigten, geradkettigen oder verzweigten Kohlenwasserstoffrest mit 4 bis 8 Kohlenstoffatomen bedeutet.

2. Magnetisches Aufzeichnungsmedium nach Anspruch 1, **dadurch gekennzeichnet, daß** die untere Schicht mindestens eine Verbindung (A) und mindestens eine Verbindung (B) enthält.

3. Magnetisches Aufzeichnungsmedium nach einem der Ansprüche 1 oder 2, **dadurch gekennzeichnet, daß** die Bindemittelmatrix der oberen Schicht wenigstens ein Bindemittel mit einer Tg von mindestens 50°C enthält, das ausgewählt ist unter Vinylcopolymeren, Phenolharzen, Acrylaten, Epoxyharzen, Celluloseharzen, Polyestern und Polyurethanen und Gemischen davon.

4. Magnetisches Aufzeichnungsmedium nach einem der Ansprüche 1 bis 3, **dadurch gekennzeichnet, daß** die Bindemittelmatrix der unteren Schicht wenigstens ein Bindemittel mit einer Tg von weniger als 50°C enthält, das ausgewählt ist unter aus Polyurethanen, Kautschuken, Vinylpolymeren, Phenolharzen, Acrylaten, Epoxyharzen, Celluloseharzen, Polyestern und Gemischen davon.

5. Magnetisches Aufzeichnungsmedium nach einem der Ansprüche 1 bis 4, **dadurch gekennzeichnet, daß** wenigstens ein Bindemittel der oberen Schicht polare Gruppen enthält.

6. Magnetisches Aufzeichnungsmedium nach einem der Ansprüchen 1 bis 5, **dadurch gekennzeichnet, daß** wenigstens ein Bindemittel der unteren Schicht polare Gruppen enthält.

7. Magnetisches Aufzeichungsmedium nach Anspruch 4, wobei die Bindemittelmatrix der unteren Schicht außerdem ein wenigstens/ein Bindemittel mit einer Tg von mindestens 50°C enthält, das ausgewählt ist unter Vinylcopolymeren, Phenolharzen, Acrylaten, Epoxyharzen, Celluloseharzen, Polyestern und Polyurethanen und Gemischen davon.

8. Magnetisches Aufzeichnungsmedium nach einem der Ansprüche 1 bis 7, **dadurch gekennzeichnet, daß** die Verbindungen (A) und (B) in der oberen Schicht in einem Anteil im Bereich von etwa 0,2 bis 10 Gew.-%, bezogen auf das magnetische Pigment, enthalten sind.

9. Magnetisches Aufzeichnungsmedium nach Anspruch 8, **dadurch gekennzeichnet, daß** das Gewichtsverhältnis von (A) zu (B) in der oberen Schicht im Bereich von 20:80 bis 80:20 liegt.

10. Magnetisches Aufzeichnungsmedium nach einem der Ansprüche 1 bis 9, **dadurch gekennzeichnet, daß** die untere Schicht mindestens ein Pigment P1 mit einem BET-Wert von mindestens 40 m²/g enthält.

11. Magnetisches Aufzeichnungsmedium nach einem der Ansprüche 1 bis 10, **dadurch gekennzeichnet, daß** die obere Schicht außerdem ein nichtmagnetisches Pigment P4 mit einer Teilchengröße enthält, welche kleiner ist als die Trockendicke dieser Schicht.

12. Magnetisches Aufzeichnungsmedium nach Anspruch 11, **dadurch gekennzeichnet, daß** die nichtmagnetischen Pigmente P3 und P4 der oberen Schicht ausgewählt sind aus Metalloxiden, Metallcarbonaten, Metällsulfaten, Metallnitriden, Metallcarbiden und Metallsulfiden.

13. Magnetisches Aufzeichnungsmedium nach Anspruch 12, **dadurch gekennzeichnet, daß** das Pigment P3 und/oder P4 ein Al₂O₃ ist.

14. .Magnetisches Aufzeichnungsmedium nach einem der Ansprüche 11 bis 13,
**dadurch gekennzeichnet, daß** das Pigment P3 mit der größeren Teilchengröße und das Pigment P4 mit der kleineren Teilchengröße im Gewichtsverhältnis von 80:20 bis 20:80 enthalten sind.

15. Magnetisches Aufzeichnungsmedium nach einem der Ansprüche 1 bis 14, **dadurch gekennzeichnet, daß** das anorganische Pigment P1 der unteren Schicht ausgewählt ist aus Metalloxiden und Rußen.

16. Magnetisches Aufzeichnungsmedium nach einem der Ansprüche 1 bis 15, **dadurch gekennzeichnet, daß** das magnetische Pigment P2 in der oberen Schicht ein Metallpulver oder ein Legierungspulver mit einer Koerzitivkraft von mindestens 100 kA/m ist.

17. Magnetisches Aufzeichnungsmedium nach einem der Ansprüche 1 bis 16,
**dadurch gekennzeichnet, daß** das magnetische Pigment P2 der oberen Schicht ein hochkoerzitives Ferrit, bevorzugt Bariumferrit, ist.

18. Magnetisches Aufzeichnungsmedium nach einem der Ansprüche 1 bis 17, **dadurch gekennzeichnet, daß** die untere Schicht an Stelle oder im Gemisch mit dem anorganischen Pigment P1 ein weichmagnetisches Pigment P5 mit einer Koerzitivkräft von kleiner als 0,7 kA/m enthält.

19. Magnetisches Aufzeichnungsmedium nach einem der Ansprüche 1 bis 18, **dadurch gekennzeichnet, daß** die Verbindung (A) Butoxyethoxyethylstearat umfasst.

20. Magnetisches Aufzeichnungsmedium nach einem der Ansprüche 1 bis 19, **dadurch gekennzeichnet, daß** die Verbindung (B) Isobutylstearat umfasst.

21. Verfahren zur Herstellung eines magnetischen Aufzeichnungsträgers nach einem der Ansprüche 1 bis 20, **dadurch gekennzeichnet, daß** die obere Schicht auf eine bereits trockene, auf dem Träger befindliche untere Schicht aufgetragen wird; oder die obere Schicht auf eine nasse, auf dem Träger befindliche untere Schicht aufgetragen wird oder daß beide Schichten simultan auf den Träger aufgetragen werden.

22. Verfahren zur Herstellung eines magnetischen Aufzeichnungsträgers nach Anspruch 21, **dadurch gekennzeichnet, daß** das Medium nach Autragung der Magnetschicht getrocknet und anschließend einem Kalandriervorgang unter Anwendung von Druck und gegebenenfalls erhöhter Temperatur unterzogen wird.
